# EUROPEAN PATENT APPLICATION

(11) **EP 4 789 957 A1**
(43) Date of publication of application: **12.08.2026**
(21) Application number: 25382091.4
(22) Date of filing: 06.02.2025
(51) Int. Cl.: B62K 3/02, B62K 19/20, B62K 19/22, B62K 19/36

(54) **IMPROVED BICYCLE FRAME**

(71) Applicant: ORBEA, S. COOP., 48269 Mallabia (BIZKAIA) (ES)
(72) Inventor: OTXOA ALBERDI, Kepa, 2500 ARRASATE (ES)
(74) Representative: Cueto, Sénida

(57) **Abstract**

The invention discloses an improved bicycle frame (1) comprising a seat tube (2) joined to a top tube (3) and, at least, a seat stay (4). The seat tube (2) further has an open upper end for the introduction of a seat post (SP). The seat tube (2) comprises an upper portion (21) and a lower portion (22) fixed permanently one to the other. The top tube (3) and the seat stay (4) are joined to the lower portion (22). Further, the upper portion (21) is housed within the lower portion (22), where a lower end of said upper portion (21) is located below the highest connection of the connection between the lower portion (22) and the top tube (3) and the connection between the lower portion (22) and the seat stay (4).

## Description

### Object of the invention

The present invention belongs to the field of bicycles, and more particularly to the design of a bicycle frame.

The present invention is directed to a bicycle frame having a new configuration that reduces tensions at the area where the seat tube meets the top tube and the seat stays.

### State of the art

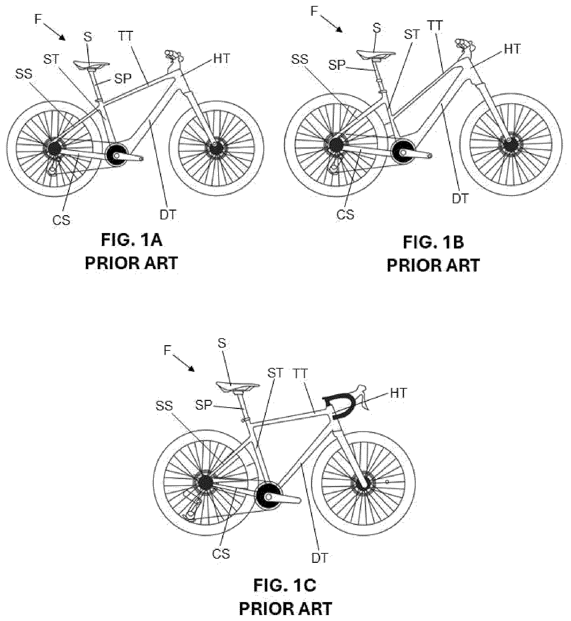

As shown in Figs. 1A-1C, a traditional bicycle frame (F) is mainly formed by a set of tubes joined together. These tubes are normally a seat tube (ST), a top tube (TT), a head tube (HT), a down tube (DT) and seat (SS) and chain stays (CS). The seat tube (ST) is open at the upper end to allow for the introduction of the seat post (SP), which is immobilised by means of a clamp. The seat (S) is provided at the upper end of the seat post (SP).

In this context, the seat stay (SS) and the top tube (TT) normally join the seat tube (ST) approximately in the same area, although this connection may be configured essentially in three different ways. In a first configuration, the seat stay (SS) and the top tube (TT) converge at the same position in an intermediate area of the seat tube (ST), as shown in Fig. 1A. In this case, the position where the three tubes converge is usually referred to as *"seat joint".* In a second configuration shown in Fig. 1B, the seat stay (SS) joins the seat tube (ST) at a height above the top tube (TT). In a third configuration, the seat stay (SS) joins the seat tube (ST) at a height below the top tube (TT), as shown in Fig. 1C.

Sometimes, it is desirable for the top tube (TT) to join the seat tube (ST) at the lowest possible height since that allows the cyclist to more easily get on and off the bicycle. However, this is disadvantageous in that the lowest the height of the connection, the greater the tension it is subject to.

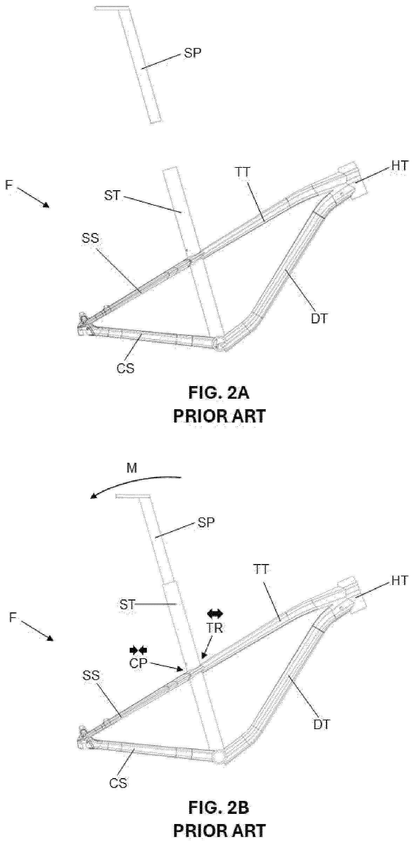

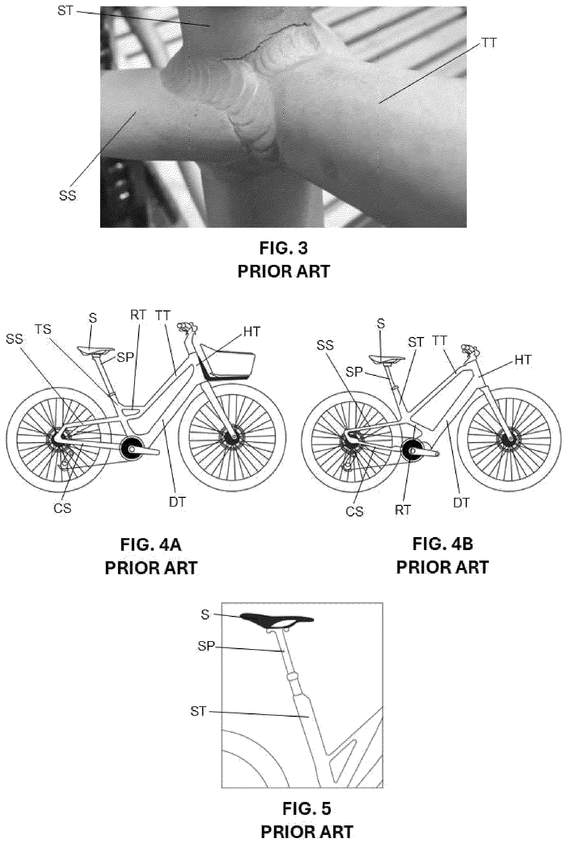

Indeed, Fig. 2A shows a bicycle frame (F) where the seat stay (SS) and the top tube (TT) join the seat tube (ST) at a seat joint positioned at a relatively low height. When the seat post (SP) is connected to the seat tube (ST) and the cyclist gets on the bicycle, the force acting onto the seat (S) has a rearwardly oriented component, as shown in Fig. 2B. This component causes a rotation torque (M) at the seat tube (ST) that, in the position shown in Fig. 2B, is oriented in anticlockwise direction. In consequence, at the rear side of the seat joint (left side in the figure) a compression tension (CP) appears and at the front side of said seat joint (right side in the figure) a traction tension (TR) appears. As shown in the photograph of Fig. 3, mainly the traction tension (TR) may cause cracks in the upper front side of the connection area between the seat tube (ST) and the top tube (TT).

To solve this problem, configurations where, with different geometries, a reinforcement tube (RT) is added to the seat joint area are known. Figs. 4A and 4B show two examples of these types of configurations.

Other solutions are also known, such as increasing the diameter of the thickness of one or more of the tubes involved in the joint. Fig. 5 shows an example where the lower length of the seat tube (ST) has a thickening at the front side intended for the seat joint to better withstand the abovementioned traction tensions (TR).

Nevertheless, both adding reinforcement tubes and increasing diameter or thickness are disadvantageous in that the weight of the frame is increased.

In short, there still exists in this field a need for frame configurations reducing the tension in the area where the seat tube meets the top tube and the seat stays.

### Brief description of the invention

The inventors of the present invention solved the above-mentioned drawbacks by means of a seat tube divided into two lengths fitting one into the other in such a way that the lower end of the upper length is positioned below the highest between the connection with the top tube or the seat stay. Thus, as disclosed in greater detail below in the present document, the rotation torque of the seat tube is transmitted to a position of the lower length below the cited connection, thereby reducing the tensions at the connection itself.

This configuration is advantageous because it improves the structural resistance of the frame at the connection area of the seat tube with the top tube and the seat stay. Thus, frames where the seat stay and/or the top tube are in a lower position, i.e. farther from the upper end of the seat tube, can be designed, while dispensing with the need to provide reinforcement tubes or increasing the cross-section or the thickness of any tube.

In this document, terms *"upper", "above", "superior", "lower"*, *"below"*, *"inferior"* and the like are interpreted with reference to a bicycle in its natural use position, i.e. with the wheels on the ground. Thus, the lower side of an element is that closer to the ground supporting the wheels.

In this document, terms *"front", "anterior"*, *"rear"*, *"posterior"* and the like are interpreted with reference to the natural displacement direction of a bicycle. Thus, the front side of an element is that closer to the side towards which the bicycle moves.

In this document, the term "height" referred to the seat tube denotes the position of a particular element along the longitudinal direction of said seat tube. Thus, an element positioned higher, above or at a greater height is that closest to the upper end of the seat tube through which the seat post is introduced. On the contrary, an element positioned lower, below or at a smaller height is that farthest from the upper end of the seat tube through which the seat post is introduced.

The present invention discloses an improved bicycle frame comprising a seat tube joined to a top tube and, at least, a seat stay (normally two seat stays). The seat tube is that to which the bicycle seat is connected and it conventionally has an open upper end configured for the introduction of the seat post. On the other hand, the seat stay or stays connect an intermediate area of the seat tube with the rear wheel axle. Although these elements normally have a circular cylindrical cross-section, other configurations having different cross-section shapes are possible, such as an elongated shape (for example, oval, elliptical or the like) or a polygonal shape (for example, squared).

Naturally, the frame of the invention further comprises additional tubes depending on the particular design, such as a chain stay (normally two), a down tube and a head tube. The chain stays connect the lower end of the seat tube with the axle of the rear wheel. The down tube connects the lower end of the seat tube with the head tube. The head tube, housing the front direction axle, is connected to the top tube and the down tube. These additional elements may have any configuration, since they are not directly related with concept of the invention.

So far, only conventional features in any bicycle frame have been disclosed. The frame of the invention, however, differs from them in that the seat tube comprises an upper portion and a lower portion permanently connected one to the other, where the top tube and the seat stay are joined to the lower portion of the seat tube. Further, the upper and lower portions are provided such that a lower length of the upper portion is housed within an upper length of the lower portion. Furthermore, a lower end of said upper portion is positioned below the highest connection between the connection of the lower portion with the top tube and the connection of the lower portion with the seat stay.

This configuration is advantageous in that the tension transmitted by the upper portion of the seat tube are transmitted to an area located under the highest connection of the aforementioned two connections. Indeed, the rotation momentum that appears when the user sits onto the seat tends to rotate the upper portion of the seat tube such that its upper end moves rearwards and the lower end forward. Thus, at the higher part of the connection length between both portions, the rear side of the upper portion pushes against the rear side of the lower portion, thereby causing a compression at the seat stay. On the contrary, at the lower part of the connection length between both portions, the front side of the upper portion pushes against the front side of the lower portion. Since this point is located below the highest of the aforementioned connections, the tension caused by this force no longer takes place at the connection itself, but lower. Thus, fatigue wear is prevented.

Note that the fixation between the upper and lower portions of the seat tube is a permanent fixation. This permanent fixation can be carried out in any suitable manner, although in any case it is a connection intended to remain fixed throughout the whole useful life of the bicycle. Although types of suitable connections will be disclosed below, examples can be fixation by welding, adhesives, screws, bolts, and the like, as well as any combination thereof.

For the aforementioned length of the upper portion to be introduced within the lower portion, the latter has slightly larger dimensions than the former. In this context, the term *"dimensions"* refers to those dimensions defining the specific shape of the seat tube in the transverse plane (for example, the diameter in case of a cylindrical seat tube). Thus, the upper portion is introduced into the lower portion such that essentially all the outer surface of the length of the upper portion introduced is in contact with the inner surface of the lower portion.

On the other hand, although the upper portion may have the same dimensions along its whole length, it could also have a higher length and a lower length each having different dimensions. The upper length would have the same dimensions as the lower portion of the seat tube, while the lower length would have the slightly smaller dimensions mentioned in the paragraph above. Thus, once the length with smaller dimensions of the upper portion is fitted into the lower portion, the outer surface of the seat tube as a whole would have a visually continuous, more attractive appearance.

In principle, the two aforementioned connections may be located at different heights of the lower portion of the seat tube. Thus, if the top tube is joined at a greater height, then the lower end of the upper portion of the seat tube will be located below that connection. If, on the contrary, the seat stay is joined at a greater height, then the lower end of the upper portion of the seat tube will be located, at least, under said connection.

In any case, as disclosed in greater detail further down in the present document, in a particularly preferred configuration both connections are located at the same height, that is, essentially at the same transverse plane of the seat tube. These connections will thus form a joint commonly known as *"seat joint".* In this context note that, when both joints take place at the same height, the connection of the seat stay may comprise a part joined to the seat tube and another joined to the top tube, or it can even be connected to an area of the top tube adjacent the connection of said top tube and the seat tube. Any of these configurations of the seat tube is included in the above-mentioned preferred embodiment in which both connections are located at the same height.

The distance between the lower end of the upper portion of the seat tube and the highest of the abovementioned connections is suitable to separate the maximum tension area sufficiently downwards at the front side of the seat tube from said highest connection. In a preferred embodiment of the present invention, the lower end of the upper portion of the seat tube is positioned at a distance of, at least, 50 mm, more preferably 80 mm, below said highest connection of the connection between the lower portion and the top tube and the connection between the lower portion and the seat stay.

As mentioned above, preferably the permanent connection between the upper portion of the seat tube and the lower portion of the seat tube comprises welding.

This welding can be carried out in any suitable manner provided it ensures enough rigidity and durability. In particular, preferably welding elements are provided at the length of the upper portion of the seat tube housed within the lower portion, where these welding elements are separated both from the lower end of the upper portion of the seat tube and from an upper end of the lower portion of the seat tube.

In a particularly preferred embodiment, the frame of the invention comprises at least a front welding element provided below the highest connection of the connection between the lower portion and the top tube and the connection between the lower portion and the seat stay. Said front welding element joins a front side of the upper portion of the seat tube with a front side of the lower portion of the seat tube. This position of the front welding element is particularly advantageous because it is provided at an area where, when the bicycle is in use, the upper and lower portions tend to compress one against the other.

The front welding element may be implemented in any manner. However, since the upper portion is housed within the lower portion and the contact surface between them is not exposed to carry out the welding, in a particularly preferred embodiment the lower portion of the seat tube comprises a front orifice provided at its front side, in the aforementioned position under the highest connection. This orifice ensures that the front welding element can be implemented in a fast and simple manner.

In another preferred embodiment, the frame of the invention further comprises at least a rear welding element positioned above the highest connection of the connection between the lower portion and the top tube and the connection between the lower portion and the seat stay. Said rear welding element joins a rear side of the upper portion of the seat tube with a rear side of the lower portion of the seat tube. This position of the rear welding element is particularly advantageous because it is provided at another area where, when the bicycle is in use, the upper and lower connection tend to compress one against the other.

As in the previous case, the rear welding element can be implemented in any manner, although to facilitate the application of the welding the lower portion of the seat tube comprises at least a rear orifice, more preferably two, provided at a rear side thereof, above the cited highest connection. The implementation of the rear welding element is therefore easy.

Another preferred embodiment of the invention is directed to a frame where the top tube and the seat stay are joined to the lower portion of the seat tube at the same height, thereby conforming a seat joint as disclosed earlier in the present document. In this preferred embodiment, the lower end of the upper portion is positioned below both connections of the seat tube respectively with the top tube and the seat stay, that is, below the seat joint.

Finally, in still another preferred embodiment of the invention the permanent fixation between the upper portion and the lower portion comprises adhesives. Joining by means of adhesives can be carried out instead of the welded connection, or else both can take place simultaneously. Preferably, the adhesive is provided along the whole length of the upper portion inserted into the lower portion.

### Brief description of the figures

Details of the invention are shown in the accompanying figures, which are not to be taken as limiting the scope of the invention:
Figs. 1A-1C show respective exemplary bicycle frames according to the prior art.
Figs. 2A and 2B show an exemplary frame according to the prior art with the seat post respectively mounted and dismounted.
Fig. 3 is a photograph showing a crack in the seat joint of an exemplary bicycle according to the prior art.
Figs. 4A and 4B show respective exemplary bicycles according to the prior art having a frame with a reinforcement tube.
Fig. 5 shows an exemplary bicycle according to the prior art having a frame with a thickened seat tube.
Figs. 6A and 6B show an exemplary frame according to the present invention having the upper and lower portions of the seat tube respectively separated and fixed.
Fig. 7 shows a detailed view of the front side of the seat tube of the exemplary frame of Figs. 6A and 6B.
Fig. 8 shows a detailed view of the rear side of the seat tube of the exemplary frame of Figs. 6A and 6B.
Figs. 9A and 9B respectively show a general view and a detailed view of finite element simulations of the tensions in an exemplary frame according to the prior art.
Figs. 10A and 10B respectively show a general view and a detailed view of finite element simulations of the tensions in an exemplary frame according to the invention.

### Detailed description of the invention

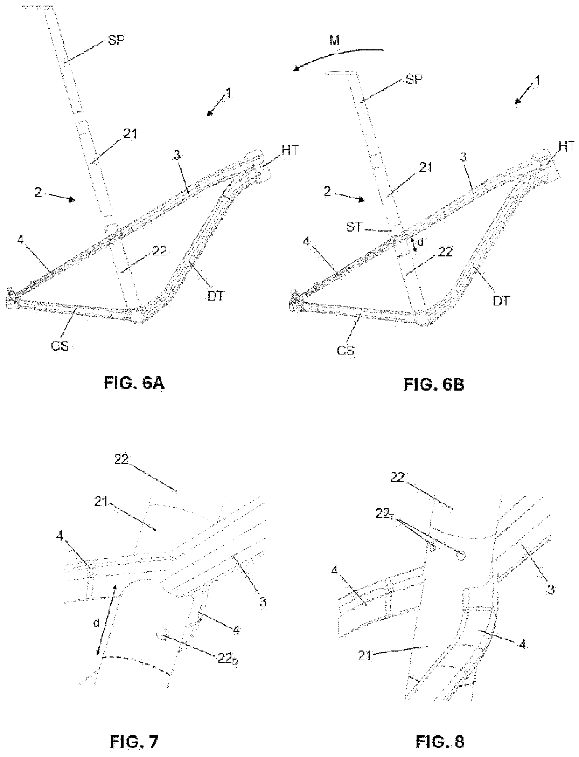

An exemplary bicycle frame (1) according to the present invention is disclosed with reference to Figs. 6-8.

As shown in Figs. 6A and 6B, the frame (1) of the invention comprises a seat tube (2), a top tube (3), a pair of seat stays (4), a pair of chain stays (CS), a down tube (DT) and a head tube (HT).

The top tube (3) and the seat stays (4) are connected essentially to the same point of the seat tube (2), thereby making up a seat joint. In this context, note that the seat stays (4) are joined not only to the seat tube (2), but also partially to the end of the top tube (3) adjacent said seat tube (2). Generally, the geometry of the connection between the three elements converging at the seat joint can adopt different configurations that, in any case, are within the scope of the present invention.

The end of the top tube (3) opposite the seat joint is connected to an upper area of the head tube (HT). The end of the seat stays (4) opposite the seat joint is connected to the place where the rear wheel is connected. The chain stays (CS) extend from said connection point with the rear wheel to the lower end of the seat joint (2). Finally, the down tube (DT) extends between said lower end of the seat tube (2) and a lower end of the head tube (HT). Further, the seat tube (2) is open at the upper end to allow for the introduction of a seat post (SP), which is conventionally connected to said seat tube (2) by means of a clamp.

The main concept of the present invention is that the seat tube (2) is divided into two portions, an upper portion (21) and a lower portion (22), where the top tube (3) and the seat stays (4) are joined to an upper area of the lower portion (22). That is, the seat joint where the above-mentioned three elements converge is positioned at the highest part of the lower portion (22) of the seat tube (2). Further, a lower length of the upper portion (21) is housed within an upper length of the lower portion (22), the two portions being permanently joined. The length of the upper portion (21) introduced into the lower portion (22) is chosen such that its lower end is located below the seat joint at least a minimum distance (d), which is 80 mm in the present example.

In this example, both portions (21, 22) have a cylindrical shape with a circular transverse cross-section, the upper portion (21) having a very slightly smaller diameter than the lower portion (22). The difference in diameter is just enough to allow for the introduction of the upper portion (21) into the lower portion (22), such that both portions (21, 22) are in contact essentially throughout the whole surface of the area where they overlap.

On the other hand, the permanent fixation between the upper portion (21) and the lower portion (22) can be carried out in a number of manners, although in the present example both portions are joined by welding. Since a part of the upper portion (21) is introduced into the lower portion (22), the contact surface between both portions (21, 22) is not exposed for implementing the welding. To solve this problem, in the present example the lower portion (22) has orifices (22_{D}, 22_{T}) provided next to the position of the seat joint. This allows for the implementation of welding elements joined to the part of the upper portion (21) exposed through the orifices (22_{D}, 22_{T}), thereby allowing for a firm fixation between both portions (21, 22).

Specifically, the lower portion (22) of the present example has a front orifice (22_{D}) and two rear orifices (22_{T}). The front orifice (22_{D}) is positioned at a front face of the lower portion (22) approximately about 40 mm below the seat joint. The front orifice (22_{D}) may have an approximate diameter of 5 mm. On the other hand, the two rear orifices (22_{T}) are provided at a rear face of the lower portion (22) approximately about 40 mm above the seat joint. The diameter of the rear orifices (22_{T}) could also be of approximately 5 mm.

The position of the orifices (22_{D}, 22_{T}) is selected such that they are positioned in areas that, during use of the bicycle, are mainly subject to compression tensions. Indeed, when the cyclist sits onto the seat of the bicycle, a rotation momentum (M) appears at the seat tube (2) that, in the position shown in Fig. 6B, is directed in anticlockwise direction. Specifically, this momentum (M) is applied onto the upper portion (21) of the seat tube (2). In consequence, at the area closest to the lower end of the upper portion (21), just below the seat joint, the front face of said upper portion (21) tends to compress against the front face of the lower portion (22). On the contrary, at the area closest to the upper end of the lower portion (22), just above the seat joint, the rear face of the upper portion (21) tends to compress against the rear face of the lower portion (22). Now, the orifices (22_{D}, 22_{T}) disclosed above are provided at the areas subject to compression, which is advantageous to improve the rigidity and durability of the connection.

Therefore, once the upper portion (21) is introduced into the lower portion (22) a sufficient distance for the lower end thereof to be located at a distance (d) below the seat joint, the permanent fixation between both portions (21, 22) can take place by applying three welding points through the three aforementioned orifices (22_{D}, 22_{T}).

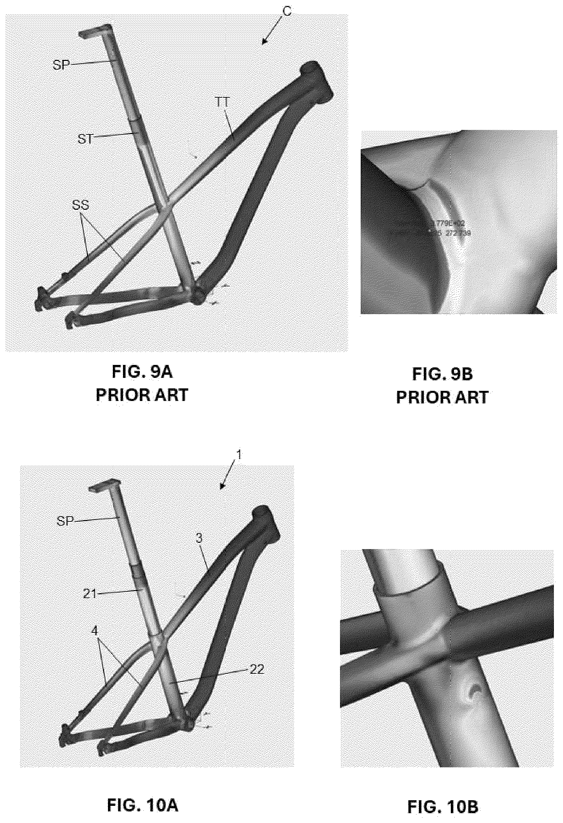

Thanks to this configuration, the tensions at the seat joint appearing during use of the bicycle, and very particularly the traction tensions appearing at the front upper area of the seat joint - at the connection area between the seat tube (2) and the top tube (TT) - are greatly reduced. Indeed, as disclosed earlier, the tensions are transmitted by the upper portion (21) to positions respectively located at the front face of the seat tube (2) below the seat joint and at the rear face of the seat tube (2) above the seat joint. This redistribution of the tensions is clearly shown in Figs. 9 and 10.

Figs. 9A and 9B show the tensions appearing at a conventional frame (C) according to the prior art where the seat tube (2) is formed by a single part. As shown in Fig. 9B, there is an area subjected to a very high traction tension at the front upper zone of the connection between the seat tube (2) and the top tube (3). This traction tension may cause cracks, as shown in Fig. 3.

Figs. 10A and 10C show the tensions appearing at a frame (1) according to the present invention. The figures, particularly Fig. 10B, show how the high tension area appearing in Fig. 9B in a conventional frame (C) is moved downwards to the area of the front face of the seat tube (2) behind which the lower end of the upper portion (21) is located.

## Claims

1. Improved bicycle frame (1), comprising a seat tube (2) joined to a top tube (3) and to, at least, a seat stay (4), the seat tube (2) having an open upper end configured for the introduction of a seat post (SP),
**characterized in that**
the seat tube (2) comprises an upper portion (21) and a lower portion (22) fixed permanently one to the other,
where the top tube (3) and the seat stay (4) are joined to the lower portion (22) of the seat tube (2), and
where a lower length of the upper portion (21) is housed within an upper length of the lower portion (22) such that a lower end of said upper portion (21) is located below the highest connection of the connection between the lower portion (22) and the top tube (3) and the connection between the lower portion (22) and the seat stay (4).

2. Bicycle frame (1) according to claim 1, where the lower end of the upper portion (21) of the seat tube (2) is located at a distance (d) of, at least, 50 mm below the highest connection of the connection between the lower portion (22) and the top tube (3) and the connection between the lower portion (22) and the seat stay (4).

3. Bicycle frame (1) according to claim 2, where the lower end of the upper portion (21) of the seat tube (2) is located at a distance (d) of, at least, 50 mm below the highest connection of the connection between the lower portion (22) and the top tube (3) and the connection between the lower portion (22) and the seat stay (4).

4. Bicycle frame (1) according to any of the previous claims, where the permanent fixation between the upper portion (21) of the seat tube (2) and the lower portion (22) of the seat tube (2) is implemented by welding.

5. Bicycle frame (1) according to claim 4, comprising welding elements provided at the length of the upper portion (21) of the seat tube (2) that is housed within the lower portion (22), where these welding elements are separated both from the lower end of the upper portion (21) of the seat tube (2) and from the upper end of the lower portion (22) of the seat tube (2).

6. Bicycle frame (1) according to claim 5, comprising at least a front welding element located below the highest connection of the connection between the lower portion (22) and the top tube (3) and the connection between the lower portion (22) and the seat stay (4), where said front welding element connects a front side of the upper portion (21) of the seat tube (2) with a front side of the lower portion (22) of the seat tube (2).

7. Bicycle frame (1) according to claim 6, where the lower portion (22) of the seat tube (2) comprises a front orifice (22_{D}) located at its front side, under the highest connection of the connection between the lower portion (22) and the top tube (3) and the connection between the lower portion (22) and the seat stay (4), for implementing the front welding element.

8. Bicycle frame (1) according to any of claims 5-7, further comprising at least a rear welding element located above the highest connection of the connection between the lower portion (22) and the top tube (3) and the connection between the lower portion (22) and the seat stay (4), where said rear welding element connects a rear side of the upper portion (21) of the seat tube (2) with a rear side of the lower portion (22) of the seat tube (2).

9. Bicycle frame (1) according to claim 8, where the lower portion (22) of the seat tube (2) comprises at least a rear orifice (22_{T}) located at its rear side, above the highest connection of the connection between the lower portion (22) and the top tube (3) and the connection between the lower portion (22) and the seat stay (4), for implementing the rear welding element.

10. Bicycle frame (1) according to claim 9, where the lower portion (22) of the seat tube (2) comprises two rear orifices (22_{T}) located at its rear side, above the highest connection of the connection between the lower portion (22) and the top tube (3) and the connection between the lower portion (22) and the seat stay (4), for implementing two rear welding elements.

11. Bicycle frame (1) according to any of the previous claims, where the top tube (3) and the seat stay (4) are joined to the lower portion (22) of the seat tube (2) at the same height, thereby making up a seat joint.

12. Bicycle frame (1) according to any of the previous claims, where the permanent fixation between the upper portion (21) and the lower portion (22) is implemented by means of adhesives.

## Amended claims

### Amended claims in accordance with Rule 137(2) EPC.

1. Improved bicycle frame (1), comprising a seat tube (2) joined to a top tube (3) and to, at least, a seat stay (4), the seat tube (2) having an open upper end configured for the introduction of a seat post (SP),
wherein the bicycle frame (1) further comprises a down tube (DT), a head tube (HT), and at least a chain stay (CS),
wherein the seat tube (2) comprises an upper portion (21) and a lower portion (22) fixed permanently one to the other,
wherein the top tube (3) and the seat stay (4) are joined to the lower portion (22) of the seat tube (2), and
where a lower length of the upper portion (21) is housed within an upper length of the lower portion (22) such that a lower end of said upper portion (21) is located below the highest connection of the connection between the lower portion (22) and the top tube (3) and the connection between the lower portion (22) and the seat stay (4),
**characterized in that** the chain stay (CS) is connected between a lower end of the lower portion (22) of the seat tube (2) and an axle of the rear wheel and the down tube (DT) is connected between the lower end of the lower portion (22) of the seat tube (2) and the head tube (HT).

2. Bicycle frame (1) according to claim 1, where the lower end of the upper portion (21) of the seat tube (2) is located at a distance (d) of, at least, 50 mm below the highest connection of the connection between the lower portion (22) and the top tube (3) and the connection between the lower portion (22) and the seat stay (4).

3. Bicycle frame (1) according to claim 2, where the lower end of the upper portion (21) of the seat tube (2) is located at a distance (d) of, at least, 80 mm below the highest connection of the connection between the lower portion (22) and the top tube (3) and the connection between the lower portion (22) and the seat stay (4).

4. Bicycle frame (1) according to any of the previous claims, where the permanent fixation between the upper portion (21) of the seat tube (2) and the lower portion (22) of the seat tube (2) is implemented by welding.

5. Bicycle frame (1) according to claim 4, comprising welding elements provided at the length of the upper portion (21) of the seat tube (2) that is housed within the lower portion (22), where these welding elements are separated both from the lower end of the upper portion (21) of the seat tube (2) and from the upper end of the lower portion (22) of the seat tube (2).

6. Bicycle frame (1) according to claim 5, comprising at least a front welding element located below the highest connection of the connection between the lower portion (22) and the top tube (3) and the connection between the lower portion (22) and the seat stay (4), where said front welding element connects a front side of the upper portion (21) of the seat tube (2) with a front side of the lower portion (22) of the seat tube (2).

7. Bicycle frame (1) according to claim 6, where the lower portion (22) of the seat tube (2) comprises a front orifice (22_{D}) located at its front side, under the highest connection of the connection between the lower portion (22) and the top tube (3) and the connection between the lower portion (22) and the seat stay (4), for implementing the front welding element.

8. Bicycle frame (1) according to any of claims 5-7, further comprising at least a rear welding element located above the highest connection of the connection between the lower portion (22) and the top tube (3) and the connection between the lower portion (22) and the seat stay (4), where said rear welding element connects a rear side of the upper portion (21) of the seat tube (2) with a rear side of the lower portion (22) of the seat tube (2).

9. Bicycle frame (1) according to claim 8, where the lower portion (22) of the seat tube (2) comprises at least a rear orifice (22_{T}) located at its rear side, above the highest connection of the connection between the lower portion (22) and the top tube (3) and the connection between the lower portion (22) and the seat stay (4), for implementing the rear welding element.

10. Bicycle frame (1) according to claim 9, where the lower portion (22) of the seat tube (2) comprises two rear orifices (22_{T}) located at its rear side, above the highest connection of the connection between the lower portion (22) and the top tube (3) and the connection between the lower portion (22) and the seat stay (4), for implementing two rear welding elements.

11. Bicycle frame (1) according to any of the previous claims, where the top tube (3) and the seat stay (4) are joined to the lower portion (22) of the seat tube (2) at the same height, thereby making up a seat joint.

12. Bicycle frame (1) according to any of the previous claims, where the permanent fixation between the upper portion (21) and the lower portion (22) is implemented by means of adhesives.
